# EUROPÄISCHE PATENTSCHRIFT

(11) **EP 2 225 089 B1**
(45) Veröffentlichungstag und Bekanntmachung des Hinweises auf die Patenterteilung: **13.03.2013**
(21) Anmeldenummer: 07765183.4
(22) Anmeldetag: 11.07.2007
(51) Int. Cl.: B29C 65/00, B29C 65/08

(54) **VERFAHREN ZUM VERBINDEN VON FOLIEN**
METHOD FOR THE BONDING OF FOILS
PROCÉDÉ DE JONCTION DE FEUILLES

(43) Veröffentlichungstag der Anmeldung: 08.09.2010
(73) Patentinhaber: Elag Verpackungen AG, 3422 Kirchberg (CH)
(72) Erfinder: KROPF, Martin, CH-3053 Münchenbuchsee (CH); AUCHLI, Christian, CH-3612 Steffisburg (CH)
(74) Vertreter: Ofner, Clemens
(86) Internationale Anmeldenummer: PCT/EP2007/006166
(87) Internationale Veröffentlichungsnummer: WO 2009/006924

(56) Entgegenhaltungen:
- EP-A- 1 241 100
- US-A- 5 890 347

## Beschreibung

Die Erfindung betrifft ein Verfahren zum Verbinden von Folien, bestehend aus mindestens einer Schicht aus der Gruppe von Polyethylen, Polypropylen Polyamid und Polyethylenterephtalat durch Schweissen.

Bei der Herstellung von Verpackungen aus Kunststofffolien ist es bekannt, die Folien durch Zufuhr von Wärme miteinander zu verschweissen. Dabei werden bevorzugt Verbundfolien aus mindestens zwei Schichten verwendet, von denen die der Verbindung abgewandte Schicht eine höheren Erweichungstemperatur hat als die zu verschweissende Schicht. In Fällen, in denen bei der Produktion mehrere Verbundfolien übereinander zu liegen kommen, kann es erwünscht sein, dass die Folienverbunde untereinander nicht verschweissen. Dies wird dadurch verhindert, dass die entsprechenden Oberflächen behandelt oder beschichtet werden. Die betreffende Oberfläche wird in der Fachsprache als nicht siegelfähige Seite der Verbundfolie bezeichnet.

In der Praxis treten aber Fälle auf, beispielsweise bei der Herstellung von Standbeuteln, in denen die Verbundfolien partiell auch an den nicht siegelfähigen Seiten miteinander unter Erreichung einer ausreichender mechanischen Festigkeit verbunden werden sollen. Zu diesem Zweck hat man bisher eine der zu verbindenden Verbundfolien partiell derart ausgeschnitten, dass im betreffenden Bereich unbehandelte bzw. unbeschichtete Oberflächen aufeinander zu liegen kommen. Bei Standbeuteln spricht man unter Fachleuten vom "Bodeneckenloch". Durch diese Ausschnitte werden aber unerwünschte Schwächungen im Folienverbund herbeigeführt, was sich insbesondere bei dynamischer Beanspruchung der Verbindungen negativ auswirkt. Ein anderer Ansatz geht davon aus, die Wärmezufuhr und/oder die Anpresskraft und/oder die Siegelzeit zu erhöhen, mit dem Ziel, die an sich nicht siegelfähigen Schichten miteinander zu verbinden. Dieser Ansatz führt jedoch in der Regel nicht zu einer ausreichenden Festigkeit der Verbindung.

Es ist auch bekannt, Kunststoffteile inklusive Folien mittels Ultraschall zu schweissen. Im Fügebereich erfolgt dabei eine Erwärmung durch die Absorption mechanischer Schwingungen, durch die Reflexion der Schwingungen in der Fügezone und durch die Grenzflächenreibung der Fügeflächen. Bei relativ dünnen und siegelbaren Folien wird die Ultraschallschweissung mit Erfolg eingesetzt. Bei der Verbindung von Folien mit einer nicht siegelbaren Schicht und/oder von relativ dicken Folien stösst das herkömmliche Ultraschallverfahren jedoch an seine Grenzen, weil im Fügebereich keine ausreichend definierte örtliche Energiedichte erreichbar ist.

Ausgehend von diesem Stand der Technik, siehe z.B. EP 1241100 A1, liegt der Erfindung die Aufgabe zu Grunde, die geschilderten Nachteile zu überwinden und ein Verfahren zum Verbinden von Folien vorzuschlagen, mit dem sich Verbindungen herstellen lassen, die insbesondere hinsichtlich dynamischer Belastungen erhöhten Anforderungen an ihre Festigkeit genügen.

Diese Aufgabe wird erfindungsgemäss durch das in Anspruch 1 beschriebene Verfahren gelöst.

Mit dem Begriff "aktiv" ist im vorliegenden Zusammenhang gemeint, dass die Durchmischung der Werkstoffe auch durch äussere Einwirkungen und nicht allein auf Grund der Erwärmung und monodirektionaler Druckeinwirkung erfolgt.

Diese erfindungsgemässe Lösung hat insbesondere den Vorteil, dass in Folge einer kurzzeitigen homogenen Erwärmung der Folien eine aktive Durchmischung der Oberflächen der beteiligten Folien ermöglicht wird, was zu einer hochfesten Verbindung der Folien führt, die eine erhöhte dynamische Belastungsfähigkeit aufweisen. Ein weiterer wesentlicher Vorteil dieses Verfahrens besteht darin, dass damit auch Folien mit an sich nicht siegelbaren Oberflächen verbunden werden können. Noch ein wesentlicher Vorteil besteht in der Möglichkeit, nun auch dicke und relativ weiche Folien miteinander derart zu verbinden, dass die Verbindung auch erhöhten dynamischen Beanspruchungen Stand hält.

Die Tiefe der Zone der Durchmischung misst zwischen 30 % und 70 % der Gesamtdicke der Folienverbunds. Es hat sich gezeigt, dass dabei die erzeugte Verbindung eine maximale Festigkeit erreicht.

Nach einer anderen Ausführungsart besteht mindestens eine der zu verbindenden Folien aus zwei Lagen, wobei die der Verbindung zugewandte Lage aus Polyethylen und die der Verbindung abgewandte Lage aus Polypropylen besteht. Da Polyethylen eine tiefere Erweichungstemperatur als Polypropylen hat, kann die Erwärmung auf eine zwischen diesen beiden Erweichungstemperaturen liegende Temperatur erfolgen, so dass die Verbindung im Bereich der Kontaktschicht entsteht.

Vorteilhaft ist auch eine weitere Ausführungsform, bei der mindestens eine der zu verbindenden Folien aus zwei Lagen besteht, wobei die der Verbindung zugewandte Lage aus Polypropylen und die der Verbindung abgewandte Lage aus Polyamid oder Polyethylenterephtalat besteht. Ein solcher Aufbau begünstigt auf Grund der unterschiedlichen Erweichungstemperaturen sowohl herkömmliche thermische Siegelungen als auch das erfindungsgemässe Verfahren.

Vorteilhaft ist weiter eine Ausbildung, bei welcher mindestens eine der zu verbindenden Folien aus mehr als zwei Lagen besteht. Diese Massnahme erweitert den Anwendungsbereich der Produkte aus dem erfindungsgemässen Verfahren.

Nach einer anderen Ausführungsvariante ist eine Oberfläche zwecks Reduktion der Siegelfähigkeit behandelt oder beschichtet, beispielsweise durch Koronaentladung oder durch Lackierung. Die hier erwünschte Reduktion der Siegelfähigkeit soll ein unerwünschtes anhaften der Folienoberfläche an Werkzeugen und Anlagenteilen verhindern, ist aber auf Grund der durch das Verfahren erreichten Durchbrechung der betreffenden Schicht einer hochfesten Verbindung nicht hinderlich.

Vorteilhaft ist auch eine Weiterbildung, gemäss welcher Ultraschall über eine im Wesentlichen ebene Fläche einer Sonotrode homogen über den Querschnitt des Folienverbunds eingebracht wird. Dies ermöglicht die Verwendung einfacher und somit kostengünstiger Sonotroden.

Wenn nach einer weiteren Ausführungsart des Verfahrens die mit der Folie in Kontakt kommende Arbeitsfläche der Sonotrode vorwiegend in einer Richtung senkrecht zu ihrer Oberfläche schwingt, ist der erreichbare Energieeintrag besonders vorteilhaft.

Bei einer anderen Ausgestaltung wird auf der der Sonotrode gegenüberliegenden Seite der Verbindung ein Gegenwerkzeug mit mindestens einer Erhebung angeordnet, welche in den vorher erweichten Folienwerkstoff eingedrückt wird. Diese Massnahme unterstützt und verstärkt die laterale und vertikale Durchmischung des plastischen Folienmaterials.

Eine andere Weiterbildung sieht vor, dass die mindestens eine Erhebung länglich ausgebildet ist. Dadurch lässt sich die Form und Abmessung der erzeugten Verbindungen an unterschiedlichste Anforderungen anpassen.

Vorteilhaft ist auch eine Ausbildung, bei der die mindestens eine Erhebung einen trapezförmigen oder trapezoidförmigen Querschnitt aufweist. Dabei wird insbesondere die laterale Durchmischung des plastischen Folienmaterials begünstigt. Dabei liegen die Basiswinkel vorteilhaft in einem Bereich zwischen 20° und 90°.

Nach einer vorteilhaften Weiterbildung weist die mindestens eine Erhebung über ihre Länge verteilte Unterbrechungen auf. Diese Massnahme führt zu einer günstigeren Verteilung des plastischen Folienmaterials.

Von Vorteil ist aber auch eine Ausbildung, gemäss welcher die dem Gegenwerkzeug zugewandte Folie aus mindestens zwei Lagen besteht und die Höhe der mindestens einen Erhebung höher ist als die Dicke der dem Gegenwerkzeug zugewandten Lage. Damit erhöht man die Sicherheit, dass die Grenzschichten der miteinander zu verbindenden Folien sicher durchbrochen werden.

Nach einer anderen Ausbildungsart weist das Gegenwerkzeug Mittel zu dessen Kühlung auf. Ohne Kühlung heizt sich das Werkzeug durch aus der Folie übertragene Wärme auf, was zu unerwünschtem Aufschmelzen der dem Gegenwerkzeug zugewandten Folienoberfläche führen kann.

Mit einer Ausbildung, bei der die Folien bzw. deren der Verbindung zugewandte Lagen eine Dicke in einem Bereich von 15 µm bis 1 mm aufweisen, lassen sich Produkte erzeugen, die hohen Anforderungen an die Festigkeit, insbesondere hinsichtlich dynamischer Belastungen, genügen.

Vorteilhaft ist weiter eine Ausbildungsart, bei der die Verbindung zur Unterstützung der Aushärtung gepresst und gekühlt wird. Die Kühlung beschleunigt die Verfestigung der erzeugten Verbindung und das Pressen reduziert die Höhe von Aufwerfungen in der Folienoberfläche, die durch das Eindringen der Erhebungen des Gegenwerkzeugs entstanden sind.

Gemäss noch einer Ausführungsart werden die Folien ab mindestens einer Rolle in Form einer Materialbahn durch eine Produktionsanlage geführt. Dies erlaubt eine kostengünstige Serienproduktion von Artikeln, beispielsweise Beuteln.

Eine andere Ausführungsart sieht vor, dass an Bereichen der Folien vor oder nach der Bearbeitung durch Ultraschall thermische Schweissungen und/oder Verformungen ausgeführt werden damit lassen sich die Gesamtkosten bei der Produktion von Artikeln optimieren, weil nicht für alle Siegelungen relativ teure Ultraschallwerkzeuge erforderlich sind.

Schliesslich sieht eine andere Ausführungsart vor, dass an der Produktionsanlage Mittel zum temporären Aufheben der durch den Transport in die Materialbahn eingebrachten Zugspannung vorgesehen sind. Damit werden unerwünschte relative Verschiebungen der verbundenen Folien vor der Aushärtung der Verbindung verhindert.

Ausführungsbeispiele der Erfindung werden nachstehend unter Bezugnahme auf die angefügten Zeichnungen näher erläutert. Es zeigt
- Fig. 1: eine Draufsicht auf einen Standbeutel aus partiell nach dem erfindungsgemässen Verfahren miteinander verbundenen Kunststofffolien;
- Fig. 2: einen Querschnitt durch die Verbindungsstelle entlang der Linie II - II in Fig. 1;
- Fig. 3: den Ausschnitt III aus Fig. 2 in einem vergrösserten Massstab.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäss auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäss auf die neue Lage zu übertragen.

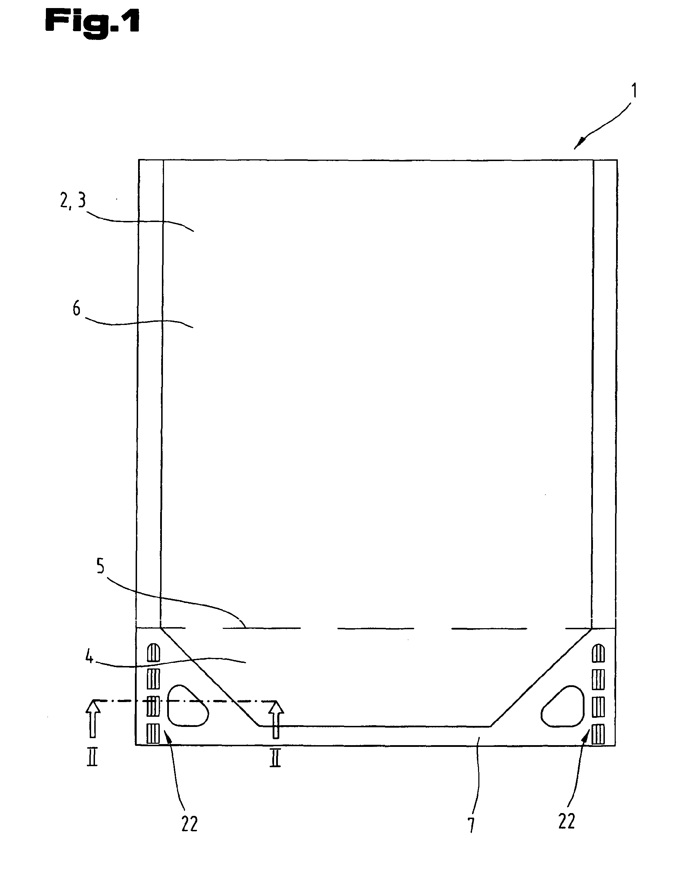

Fig. 1 zeigt eine Draufsicht auf einen an sich bekannten Standbeutel 1 in flachem, ungefülltem Zustand. Der Standbeutel 1 besteht aus einer Frontseitenfolie 2 und einer Rückseitenfolie 3, die an ihrem linken und rechten Seitenrand durch Siegelränder 6 miteinander verschweisst sind. Im unteren Bereich des Beutels ist zwischen der Frontseitenfolie 2 und der Rückseitenfolie 3 eine entlang einer Faltlinie 5 umgefaltete Bodenfolie 4 eingelegt. Je ein Schenkel der Bodenfolie 4 ist durch einen Bodensiegelrand 7 mit der Frontseitenfolie 2 beziehungsweise der Rückseitenfolie 3 verbunden.

Um die Standsicherheit des Beutels zu verbessern, sind im unteren Eckbereich des Beutels 1 die Frontseitenfolie 2 und die Rückseitenfolie 3 miteinander verbunden. Erfahrungsgemäss ist dieser Bereich grossen mechanischen Belastungen ausgesetzt, wenn der Beutel in gefülltem Zustand fallen gelassen wird. Daher erfolgt diese Verbindung unter Anwendung des erfindungsgemässen Verfahrens durch Tiefensiegelungen 22.

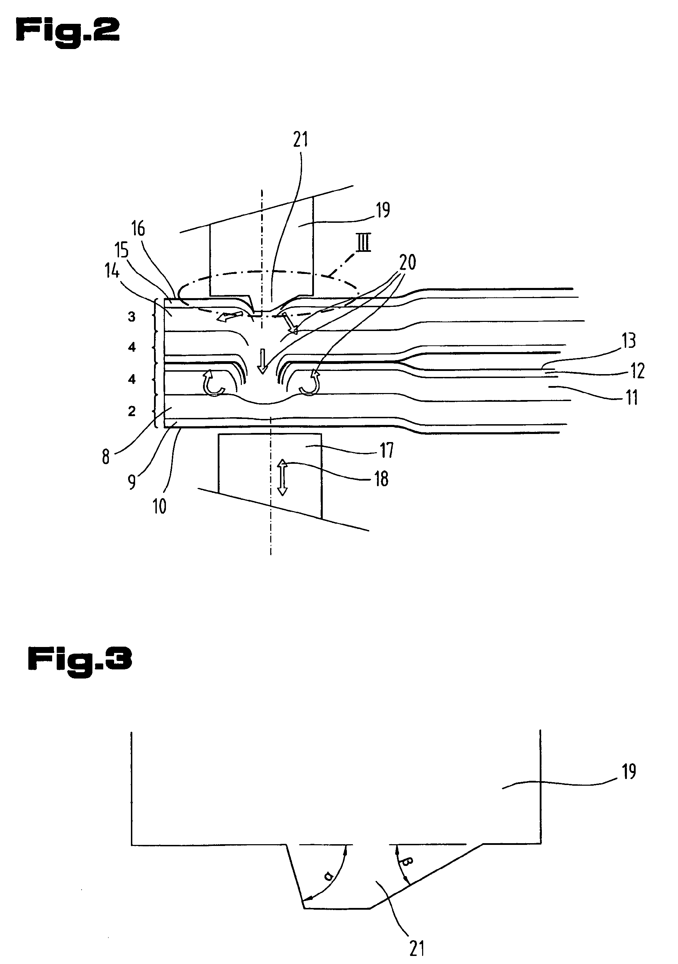

Fig. 2 zeigt einen Querschnitt durch die Verbindungsstelle entlang der Linie II - II in Fig. 1. Wie man sicht, besteht in diesem Beispiel jede der beteiligten Folien, nämlich die Frontwandfolie 2, die Bodenfolie 4 und die Rückwandfolie 3 aus jeweils zwei Lagen, nämlich einer siegelfähigen Lage 8, 11, 14 und einer nicht siegelfähigen Lage 9, 12, 15. Die siegelfähige Lage 8, 11, 14 besteht dabei beispielsweise aus Polyethylen und hat eine Dicke von 200 µm. Die nicht siegelfähigen Lage 9, 12, 15 besteht beispielsweise aus Polypropylen und hat eine Dicke von 20 µm.

Um die Bedruckbarkeit der Folie zu verbessern, aber auch um das Anhaften der Folie an den Siegelwerkzeugen zu verhindern, kann jeweils die aussen liegende Oberfläche der nicht siegelfähigen Lage 9, 12, 15 behandelt, insbesondere aufgeraut oder beschichtet werden. Eine Aufrauung erreicht man beispielsweise durch ätzen oder durch Koronabehandlung. Die Aufrauung oder Beschichtung ist in Fig. 2 mit 10, 13, 16 bezeichnet.

Beim dargestellten Beispiel treffen in der Mitte des Folienverbunds zwei nicht siegelbare Lagen 12 aufeinander, die zudem mit einer Beschichtung 13 versehen sind, woraus bekannterweise Schwierigkeiten beim Verbinden der Folien resultieren. Diese Schwierigkeiten äussern sich dadurch, dass die Verbindung, falls überhaupt eine solche erreicht wird, nur eine geringe Festigkeit aufweist und folglich bereits bei geringer mechanischer Belastung bricht.

Wie deutlich aus der Darstellung gemäss Fig. 2 hervorgeht, wird durch das erfindungsgemässe Verfahren der oben genannte Nachteil der mangelhaften Verbindung überwunden. Mit einer Sonotrode 17 werden Ultraschallschwingungen in die zu verbindenden Folien eingebracht, was zu einer Erwärmung und folglich Erweichung des Werkstoffes aller Lagen führt. Die Schwingbewegung der Sonotrode ist durch den Doppelpfeil 18 symbolisiert. Ein Gegenwerkzeug 19 ist mit Erhebungen 21 versehen, die in die erweichten Folien eindringen und zu einer aktiven lateralen und vertikalen Vermischung der Werkstoffe im Bereich der Kontaktfläche führen, wie dies durch die Pfeile 20 veranschaulicht ist.

Fig. 3 zeigt die in Fig. 2 mit "III" bezeichnete Einzelheit in einem vergrösserten Massstab. Die Erhebungen 21 haben vorzugsweise eine trapezförmige oder trapezoidförmige Querschnittsform, um damit eine optimale Verdrängung und Durchmischung des durch die Ultraschallschwingungen erreichten Folienmaterials zu erreichen. Wie man an Hand der in Fig. 1 sichtbaren, durch die Erhebungen 21 gebildeten Eindrücke sieht, können die Erhebungen 1 entlang ihrer Längserstreckung Unterbrüche aufweisen. Dadurch erreicht man einen im Wesentlichen einer Wellenlinie folgenden Verlauf des durchmischten und verschweissten Werkstoffes, was die Festigkeit der Verbindung weiter erhöht.

Bei der Serienproduktion von oben beispielhaft beschriebenen Beuteln unter Anwendung des erfindungsgemässen Verfahrens wird eine bereits bedruckte, beispielsweise aus einer dickeren Polyethylenschicht und einer dünneren Polypropylenschicht bestehende Folie auf Rollen angeliefert. Zur besseren Bedruckbarkeit ist die Polypropylenschicht beispielsweise durch eine Koronabehandlung aufgeraut worden. Die von der Rolle abgewickelte Folienbahn wird in der Längsmitte getrennt und die entstehenden Bahnhälften werden gewendet und unter Zwischenlage einer längs gefalteten Bodenfolienbahn übereinander geführt. Während sich die Bahnen synchron im Takt bewegen, werden schrittweise die seitlichen Siegelränder 6 und die Bodensiegelränder 7 durch thermische Werkzeuge erstellt. An einer die Sonotrode 17 und das Gegenwerkzeug 19 enthaltenden Station werden unter Anwendung des erfindungsgemässen Verfahrens die beiden Tiefensiegelungen 22 (Fig. 1) angebracht, wobei die Sonotrode 17 und das Gegenwerkzeug 19 so ausgebildet sind, dass jeweils zwei Tiefensiegelungen 22 an zwei nacheinander in den Bahnen entstehenden Beuteln erzeugt werden. Dabei hat sich gezeigt, dass sich die in den Bahnen vorhandene Zugspannung negativ auf die Qualität der Tiefensiegelungen 22 auswirken kann. Eine gewisse Zugspannung ist zwar notwendig, um die Bahnen zu transportieren und in der Produktionsanlage gespannt zu halten, jedoch kann diese Zugspannung bei elastischen Materialien, um die es hier geht, zu unerwünschten Verschiebungen führen. Daher wird vorzugsweise während der Erzeugung der Tiefensiegelung 22 der entsprechende Abschnitt der Bahnen fixiert und von der Zugspannung mindestens teilweise entlastet. Das Gegenwerkzeug 19 ist vorzugsweise mit Kühlkanälen versehen, die beispielsweise von einer Kühlflüssigkeit durchströmt werden. Die durch die Sonotrode 17 zugeführte Energie, die zu einem plastischen Zustand im Inneren des Folienverbundes führt, ist vom Werkstoff und der Dicke der verwendeten Folien abhängig. Die Einwirkungsdauer des Ultraschalls liegt bei einer Foliendicke von 0.8 mm in einem Bereich von 0.2 s bis 2 s. Selbstverständlich kann die Sonotrode aktiv gekühlt werden. In Folge der guten Wärmeleitfähigkeit eignen sich für diesen Zweck Sonotroden aus Aluminium besonders gut. Um eine Beschädigung der Folienoberflächen möglichst zu vermeiden, wird die Ultraschall-Leistung während der Produktion der Tiefensiegelung 22 erhöht, wobei die Anstiegszeit zwischen 0.1 s und 1 s liegt. Die Phasen des Einbringens der Ultraschall-Energie und des Eindringens der Erhebungen 21 in die Folien überschneiden sich und nach dem Abschalten der Ultraschall-Energie folgt eine Haltephase, in der die Sonotrode 17 und das Gegenwerkzeug 19 in ihrer geschlossenen Position verbleiben. Die Haltephase beträgt bei einer Foliendicke von 0.8 mm 0.2 s bis 2 s.

Anschliessend an die Produktion der Tiefensiegelung 22 ist in der Anlage eine Pressvorrichtung mit gekühlten Pressbacken angeordnet, mit denen die Tiefensiegelungen 22 glatt gepresst und abgekühlt werden. Dabei wird das durch das Eindringen der Erhebungen 21 aufgeworfene Folienmaterial wieder glatt gedrückt. Schliesslich werden die Beutel von der Bahn abgetrennt, kontrolliert und zum Versand oder zum Befüllen mit einem Produkt vorbereitet.

Die Ausführungsbeispiele zeigen eine mögliche Ausführungsvariante eines mit Hilfe des erfindungsgemässen Verfahrens hergestellten Verpackungsbeutels, wobei an dieser Stelle bemerkt sei, dass die Erfindung nicht auf die speziell dargestellte Ausführungsvariante des Verfahrensproduktes eingeschränkt ist, sondern vielmehr auch diverse Kombinationen von einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschliessend darauf hingewiesen, dass zum besseren Verständnis des Aufbaus des Verpackungsbeutels und der Schweissverbindung diese bzw. deren Bestandteile teilweise unmassstäblich und/oder vergrössert und/oder verkleinert dargestellt wurden.

### Bezugszeichenaufstellung

- 1: Standbeutel
- 2: Frontseitenfolie
- 3: Rückseitenfolie
- 4: Bodenfolie
- 5: Faltlinie

- 6: seitliche Siegelränder
- 7: Bodensiegelränder
- 8: siegelfähige Lage
- 9: nicht siegelfähige Lage
- 10: Beschichtung

- 11: siegelfähige Lage
- 12: nicht siegelfähige Lage
- 13: Beschichtung
- 14: siegelfähige Lage
- 15: nicht siegelfähige Lage

- 16: Beschichtung
- 17: Sonotrode
- 18: Schwingungen
- 19: Gegenwerkzeug
- 20: Pfeile (Durchmischung)

- 21: Erhebungen
- 22: Tiefensiegelungen

## Patentansprüche

1. Verfahren zum Verbinden von Folien, bestehend aus mindestens einer Schicht aus der Gruppe von Polyethylen, Polypropylen Polyamid und Polyethylenterephtalat durch Schweissen, wobei die Werkstoffe im Bereich der Kontaktschicht bis mindestens zur Erweichung durch Ultraschall erwärmt werden, wobei die Werkstoffe im Bereich der Kontaktschicht unter weiterer Anwendung von Ultraschallschwingungen lateral und vertikal aktiv durchmischt werden, und die Tiefe der Zone der Durchmischung zwischen 30 % und 70 % der Gesamtdicke des Folienverbunds misst.

2. Verfahren nach Anspruch 1, **dadurch gekennzeichnet, dass** mindestens eine der zu verbindenden Folien aus zwei Lagen besteht, wobei die der Verbindung zugewandte Lage aus Polyethylen und die der Verbindung abgewandte Lage aus Polypropylen besteht.

3. Verfahren nach Anspruch 1, **dadurch gekennzeichnet, dass** mindestens eine der zu verbindenden Folien aus zwei Lagen besteht, wobei die der Verbindung zugewandte Lage aus Polypropylen und die der Verbindung abgewandte Lage aus Polyamid oder Polyethylenterephtalat besteht.

4. Verfahren nach einem der vorangehenden Ansprüche, **dadurch gekennzeichnet, dass** mindestens eine der zu verbindenden Folien aus mehr als zwei Lagen besteht.

5. Verfahren nach einem der vorangehenden Ansprüche, **dadurch gekennzeichnet, dass** eine Oberfläche zwecks Reduktion der Siegelfähigkeit behandelt oder beschichtet ist, beispielsweise durch Koronabehandlung oder durch Lackierung.

6. Verfahren nach einem der vorangehenden Ansprüche, **dadurch gekennzeichnet, dass** Ultraschall über eine im Wesentlichen ebene Fläche einer Sonotrode homogen über den Querschnitt des Folienverbunds eingebracht wird.

7. Verfahren nach einem der vorangehenden Ansprüche, **dadurch gekennzeichnet, dass** die mit der Folie in Kontakt kommende Arbeitsfläche der Sonotrode vorwiegend in einer Richtung senkrecht zu ihrer Oberfläche schwingt.

8. Verfahren nach einem der Ansprüche 6 bis 7, **dadurch gekennzeichnet, dass** auf der der Sonotrode gegenüberliegenden Seite der Verbindung ein Gegenwerkzeug mit mindestens einer Erhebung angeordnet wird, welche in den vorher erweichten Folienwerkstoff eingedrückt wird.

9. Verfahren nach Anspruch 8, **dadurch gekennzeichnet, dass** die mindestens eine Erhebung länglich ausgebildet ist.

10. Verfahren nach einem der Ansprüche 8 oder 9, **dadurch gekennzeichnet, dass** die mindestens eine Erhebung einen trapezförmigen oder trapezoidförmigen Querschnitt aufweist.

11. Verfahren nach Anspruch 10, **dadurch gekennzeichnet, dass** die Basiswinkel der mindestens einen Erhebung in einem Bereich zwischen 20° und 90° liegen.

12. Verfahren nach einem der Ansprüche 8 bis 11, **dadurch gekennzeichnet, dass** die mindestens eine Erhebung über ihre Länge verteilte Unterbrechungen aufweist.

13. Verfahren nach einem der Ansprüche 8 bis 12, **dadurch gekennzeichnet, dass** die dem Gegenwerkzeug zugewandte Folie aus mindestens zwei Lagen besteht und die Höhe der mindestens einen Erhebung höher ist als die Dicke der dem Gegenwerkzeug zugewandten Lage.

14. Verfahren nach einem der Ansprüche 8 bis 13, **dadurch gekennzeichnet, dass** das Gegenwerkzeug Mittel zu dessen Kühlung aufweist.

15. Verfahren nach einem der vorangehenden Ansprüche, **dadurch gekennzeichnet, dass** die Folien bzw. deren der Verbindung zugewandte Lagen eine Dicke in einem Bereich von 15 µm bis 1 mm aufweisen.

16. Verfahren nach einem der vorangehenden Ansprüche, **dadurch gekennzeichnet, dass** die Verbindung zur Unterstützung der Aushärtung gepresst und gekühlt wird.

17. Verfahren nach einem der vorangehenden Ansprüche, **dadurch gekennzeichnet, dass** die Folien ab mindestens einer Rolle in Form einer Materialbahn durch eine Produktionsanlage geführt werden.

18. Verfahren nach Anspruch 17, **dadurch gekennzeichnet, dass** an Bereichen der Folien vor oder nach der Bearbeitung durch Ultraschall thermische Schweissungen und/oder Verformungen ausgeführt werden.

19. Verfahren nach einem der Ansprüche 17 bis 18, **dadurch gekennzeichnet, dass** an der Produktionsanlage Mittel zum temporären Aufheben der durch den Transport in die Materialbahn eingebrachten Zugspannung vorgesehen sind.

## Claims

1. Method of bonding foils comprising at least one layer from the group comprising polyethylene, polypropylene, polyamide and polyethylene terephthalate by welding, whereby the materials in the region of the contact layer are heated by ultrasound at least until softened, and the materials in the region of the contact layer are actively mixed laterally and vertically by continued application of ultrasonic vibrations, and the depth of the zone where mixing takes place measures between 30 % and 70 % of the total thickness of the foil join.

2. Method as claimed in claim 1, **characterised in that** at least one of the foils to be bonded comprises two layers, and the layer facing the join is made from polyethylene and the layer facing away from the join is made from polypropylene.

3. Method as claimed in claim 1, **characterised in that** at least one of the foils to be bonded comprises two layers, and the layer facing the join is made from polypropylene and the layer facing away from the join is made from polyamide or polyethylene terephthalate.

4. Method as claimed in one of the preceding claims, **characterised in that** at least one of the foils to be bonded comprise more than two layers.

5. Method as claimed in one of the preceding claims, **characterised in that** one surface is treated or coated with a view to reducing the sealing capacity, for example by means of a corona treatment or by lacquering.

6. Method as claimed in one of the preceding claims, **characterised in that** ultrasound is applied homogeneously across the cross-section of the foil join by means of an essentially flat surface of a sonotrode.

7. Method as claimed in one of the preceding claims, **characterised in that** the working surface of the sonotrode coming into contact with the foil vibrates predominantly in a direction perpendicular to its surface.

8. Method as claimed in one of claims 6 to 7, **characterised in that** a co-operating tool with at least one protuberance is disposed on the side of the join lying opposite the sonotrode, which is pressed into the previously softened foil material.

9. Method as claimed in claim 8, **characterised in that** the at least one protuberance is of an elongate design.

10. Method as claimed in one of claims 8 or 9, **characterised in that** the at least one protuberance has a trapezium-shaped or trapezoid-shaped cross-section.

11. Method as claimed in claim 10, **characterised in that** the base angle of the at least one protuberance lies within a range of between 20° and 90°.

12. Method as claimed in one of claims 8 to 11, **characterised in that** the at least one protuberance has interruptions distributed across it length.

13. Method as claimed in one of claims 8 to 12, **characterised in that** the foil facing the co-operating tool comprises at least two layers and the height of the at least one protuberance is higher than the thickness of the layer facing the co-operating tool.

14. Method as claimed in one of claims 8 to 13, **characterised in that** the co-operating tool has means for the cooling thereof.

15. Method as claimed in one of the preceding claims, **characterised in that** the foils or their layers facing the join have a thickness in a range of 15 µm to 1 mm.

16. Method as claimed in one of the preceding claims, **characterised in that** the join is pressed and cooled to assist setting.

17. Method as claimed in one of the preceding claims, **characterised in that** the foils are fed through a production plant from at least one roll in the form of a material web.

18. Method as claimed in claim 17, **characterised in that** thermal welds and/or deformations are made in regions of the foils by ultrasound before or after processing.

19. Method as claimed in one of claims 17 to 18, **characterised in that** means are provided in the production plant for temporarily relieving the tension induced in the material web by conveying.

## Revendications

1. Procédé d'assemblage par soudage de films ou de feuilles, constitués d'au moins une couche parmi le groupe du polyéthylène, du polypropylène, du polyamide, et du poly(téréphtalate d'éthylène), les matériaux dans la zone de la couche de contact étant chauffés par ultrasons au moins jusqu'au ramollissement, procédé dans lequel les matériaux sont activement mélangés latéralement et verticalement dans la zone de la couche de contact moyennant la poursuite de l'application des vibrations ultrasonores, et dans lequel la profondeur de la zone de mélange mesure entre 30 % et 70 % de l'épaisseur totale du composite des feuilles ou des films.

2. Procédé selon la revendication 1, **caractérisé en ce qu'**au moins un des films ou des feuilles à assembler est constitué de deux couches, la couche tournée vers l'assemblage consistant en polyéthylène et la couche détournée de l'assemblage consistant en polypropylène.

3. Procédé selon la revendication 1, **caractérisé en ce qu'**au moins un des films ou des feuilles à assembler est constitué de deux couches, la couche tournée vers l'assemblage consistant en polypropylène et la couche détournée de l'assemblage consistant en polyamide ou en poly(téréphtalate d'éthylène).

4. Procédé selon l'une quelconque des revendications précédentes, **caractérisé en ce qu'**au moins un des films ou des feuilles à assembler est constitué de plus de deux couches.

5. Procédé selon l'une quelconque des revendications précédentes, **caractérisé en ce qu'**une surface est traitée ou revêtue en vue de la réduction de la capacité de scellement, par exemple par traitement par effet corona ou par peinture ou vernissage.

6. Procédé selon l'une quelconque des revendications précédentes, **caractérisé en ce que** les ultrasons sont introduits de façon homogène sur la section de l'assemblage de films ou de feuilles par une surface sensiblement plane d'une sonotrode.

7. Procédé selon l'une quelconque des revendications précédentes, **caractérisé en ce que** la surface de travail de la sonotrode arrivant en contact avec le film ou la feuille oscille de façon prépondérante dans une direction perpendiculaire à sa surface.

8. Procédé selon l'une quelconque des revendications 6 à 7, **caractérisé en ce que** du côté de l'assemblage opposé à la sonotrode est disposé un contre-outil avec au moins une partie en relief qui est enfoncée dans le matériau précédemment ramolli du film ou de la feuille.

9. Procédé selon la revendication 8, **caractérisé en ce que** ladite au moins une partie en relief est configurée oblongue.

10. Procédé selon l'une quelconque des revendications 8 ou 9, **caractérisé en ce que** ladite au moins une partie en relief présente une section en forme de trapèze ou de quadrilatère.

11. Procédé selon la revendication 10, **caractérisé en ce que** l'angle à la base de ladite au moins une partie en relief est compris dans un intervalle entre 20° et 90°.

12. Procédé selon l'une quelconque des revendications 8 à 11, **caractérisé en ce que** ladite au moins une partie en relief comporte des interruptions réparties sur sa longueur.

13. Procédé selon l'une quelconque des revendications 8 à 12, **caractérisé en ce que** le film ou la feuille tourné vers le contre-outil est constitué d'au moins deux couches et **en ce que** la hauteur de ladite au moins une partie en relief est plus haute que l'épaisseur de la couche tournée vers le contre-outil.

14. Procédé selon l'une quelconque des revendications 8 à 13, **caractérisé en ce que** le contre-outil comporte des moyens pour son refroidissement.

15. Procédé selon l'une quelconque des revendications précédentes, **caractérisé en ce que** les films ou les feuilles, respectivement leurs couches tournées vers l'assemblage, présentent une épaisseur comprise dans un intervalle de 15 µm à 1 mm.

16. Procédé selon l'une quelconque des revendications précédentes, **caractérisé en ce que** pour assister le durcissement, l'assemblage est comprimé et refroidi.

17. Procédé selon l'une quelconque des revendications précédentes, **caractérisé en ce que** les films ou les feuilles sont conduits à travers une installation de production sous la forme d'une bande de matériau à partir d'au moins une bobine.

18. Procédé selon la revendication 17, **caractérisé en ce que** sur des zones des films ou des feuilles, avant ou après le traitement par ultrasons, des soudages thermiques et/ou des déformations sont exécutés.

19. Procédé selon l'une quelconque des revendications 17 à 18, **caractérisé en ce que** sur l'installation de production, des moyens sont prévus pour l'annulation temporaire de la tension produite dans la bande de matériau par le transport.
